(19) Europäisches Patentamt
European Patent Office
Office européen des brevets

(11) **EP 1 962 506 B1**

(12) **EUROPEAN PATENT SPECIFICATION**

(45) Date of publication and mention
of the grant of the patent:
**04.07.2012 Bulletin 2012/27**

(51) Int Cl.:
***H04N 5/765*** (2006.01)

(21) Application number: **06833498.6**

(22) Date of filing: **28.11.2006**

(86) International application number:
**PCT/JP2006/323694**

(87) International publication number:
**WO 2007/069452 (21.06.2007 Gazette 2007/25)**

(54) **CONTENT OUTPUT DEVICE, CONTENT OUTPUT METHOD, CONTENT OUTPUT PROGRAM, AND INTEGRATED CIRCUIT**

ANORDNUNG, VERFAHREN UND PROGRAMM ZUR INHALTAUSGABE UND INTERGRIERTER SCHALTKREIS

DISPOSITIF, PROCEDE ET PROGRAMME DE SORTIE DE CONTENU ET CIRCUIT INTEGRE

(84) Designated Contracting States:
**AT BE BG CH CY CZ DE DK EE ES FI FR GB GR HU IE IS IT LI LT LU LV MC NL PL PT RO SE SI SK TR**

(30) Priority: **14.12.2005 JP 2005360754**

(43) Date of publication of application:
**27.08.2008 Bulletin 2008/35**

(73) Proprietor: **Panasonic Corporation
Kadoma-shi
Osaka 571-8501 (JP)**

(72) Inventor: **MUNETSUGU, Toshihiko,
c/o Matsushita El. Ind. Co., Ltd., IPROC
Chuo-ku, Osaka-shi, Osaka 540-6207 (JP)**

(74) Representative: **Grünecker, Kinkeldey,
Stockmair & Schwanhäusser
Leopoldstrasse 4
80802 München (DE)**

(56) References cited:
WO-A1-2005/006745     JP-A- 2001 326 888
JP-A- 2002 165 180     JP-A- 2003 111 027
US-A1- 2004 264 566     US-B1- 6 771 881

**Description**

The present invention relates to a technique of transmitting and receiving a content including discontinuous points according to a pull protocol. Each of the discontinuous points indicates a point where time indicated by time information is discontinuous.

In recent years, digital broadcasts such as a BS digital broadcast, a CS digital broadcast, a terrestrial digital broadcast, and the like have been started. In these digital broadcasts, a content transmitted from a broadcast station is MPEG2-TS format digital information.
Along with the start of the digital broadcasts, various recording/reproducing devices such as a hard disk recorder and a BD (Blu-ray Disk) recorder have been developed and released. The recording/reproducing devices store the MPEG2-TS format digital information and output the information to an external device. A content stored in these recording/reproducing devices may include a point at which time information (PCR: Program Clock Reference) generated when the content is encoded is discontinuous because of the following reasons (hereinafter, referred to as "discontinuous point"). The reasons include a change of channels while the content is recorded, a change of audio information (for example, frommonaural to stereo), editing after the content is recorded (for example, deletion of a CM), and the like. Here, the time information indicates time in the content in which a starting point of the content is defined as a start, and is expressed by a predetermined basic unit. However, time of the starting point is an arbitrary value. Also, the discontinuous point is a point at which the time information is not continuous in the predetermined basic unit.

With regard to the content including the discontinuous point, discontinuity information (hereinafter, referred to as "DIT (Discontinuity Information Table) information") indicating that the time information is discontinuous is inserted immediately before the discontinuous point. After that, the content is outputted to an external reproducing device via a digital interface. This can maintain consistency of stream information between an output device and a reproducing device.

A method of dealing with the above content including the discontinuous point is standardized by organizations such as DVB (Digital Video Broadcasting), ARIB (Association of Radio Industries and Business), and the like (refer to a non-patent document 1, for example).
Moreover, a patent document 1 discloses a technique of facilitating, a hardware configuration of a recording/reproducing device dealing with MPEG format digital information. A patent document 2 discloses a technique relating to speeding up of processing of inserting the DIT information.

These techniques mainly assume data transmission according to IEEE1394, and have a structure in which a recording/reproducing device outputs a content in which the DIT information is inserted in one direction.
Further examples for methods dealing with discontinuity of video data can be found in Patent Document 3, Patent Document 4 and Patent Document 5.
In recent years, along with the popularization of a home network, a so-called pull protocol has come into practical use in transmission and reception of data between terminals. An example of the pull protocol is HTTP (HyperText Transfer Protocol) that uses an IP network. According to the pull protocol such as the HTTP, it is required that a transmitting device notifies a receiving device of a file size of data to be transmitted in advance, before data is transmitted and received between the terminals.

Patent Document 1: Japanese Published Patent Application No. 2002-16880

Patent Document 2: Japanese Published Patent Application No. 2002-368767

Patent Document 3: US 6 771 881,

Patent Document 4: WO 2005/006745 and

Patent Document 5 : US 2004/0264566

Non-patent document 1: ARIB, a terrestrial digital television broadcast operation regulation, technical data, TR-B14, the first tome, the second volume, 8.2.3

If a discontinuous point occurs while a content is recorded, a recording/reproducing device can insert the DIT information immediately before the discontinuous point and store the content. On the other hand, if a discontinuous point occurs in the content after the content is stored in the recording/reproducing device, because of editing of the content, the DIT information is not normally inserted in the content stored in the recording/reproducing device, in view of a processing load of the recording/reproducing device and prevention against deterioration of a recording medium. When the content is outputted to an external device via a digital interface, the DIT information is inserted immediately before the discontinuous point in which the DIT information has not been inserted, and the content is outputted to the external device. Therefore, a file size of the content stored in the recording/reproducing device may be different from a file size of the content that is actually transmitted.

In the above pull protocol, if a notified file size is different from a file size of a content that is actually transmitted, this causes problems such as missed reception, unnecessary waiting time, and the like.

Therefore, when a content is transmitted to an external reproducing device according to the pull protocol, it is required to notify the external reproducing device of an accurate file size including the DIT information. However, in order to obtain the accurate file size, it is required to count the total number of discontinuous points in which the DIT information has not been inserted by searching all packets composing the content, and calculate a file size of the content including the DIT information to be inserted in these discontinuous points. As a result, it requires substantial time to notify the file size.

Also, in order to perform such an operation, a high-performance processor has to be installed in the recording/reproducing device.

In view of the above problem, an object of the present invention is to provide a content output device, a content output method, and a content output program that can notify an accurate file size of a content to be transmitted quickly and easily.

This is achieved by the features of the independent claims.

With the above-stated construction, the calculating unit calculates the file size of the transmission content by using the number of the discontinuous points in the original content, regardless of whether or not the discontinuity information has been inserted in each of the discontinuous points in the original content. Also, the inserting unit inserts the insertion information in all of the discontinuous points in the original content to generate the transmission content.

Therefore, the following beneficial effect can be obtained. Before generating the transmission content and without searching the entire content, the file size of the transmission content can be quickly calculated by performing multiplication and addition that are easy operations and notified.

FIG. 1 is a functional block diagram showing a functional structure of each of a content recording device 100 and a content reproducing device that compose a content recording/reproducing system 800.

FIG. 2 shows an example of information stored in an information storing unit 102 of the content recording device 100.

FIG. 3 shows details of each of a discontinuous point table 130 and a packet count table 140.

FIG. 4 is a functional block diagram showing a structure of a selective inserting unit 114 that composes the content recording device 100.

FIG. 5 shows processing of generating a transmission content by a DIT judging unit 113 and the selective inserting unit 114.

FIG. 6 is a flowchart showing an operation of reproducing a content by the content recording/reproducing system 800.

FIG. 7 is a flowchart showing the operation of reproducing the content by the content recording/reproducing system 800, and is the continuation of the flowchart shown in FIG. 6.

**Description of Reference Numerals**

| | |
|---|---|
| 100 | content recording device |
| 101 | extraction writing unit |
| 102 | information storing unit |
| 103 | control information storage area |
| 104 | DB storage area |
| 105 | general area |
| 106 | editing unit |
| 107 | request receiving unit |
| 108 | reading control unit |
| 109 | DB reading unit |
| 110 | size calculating unit |
| 111 | size transmitting unit |
| 112 | content reading unit |
| 113 | DIT judging unit |
| 114 | selective inserting unit |
| 115 | content transmitting unit |
| 116 | operation inputting unit |
| 117 | control information reading unit |

118     control information transmitting unit
130     discontinuous point table
140     packet count table
200     content reproducing device
201     inputting unit
202     request transmitting unit
203     size receiving unit
204     content receiving unit
205     reproducing unit
206     outputting unit
300     receiving device
501     information inserting unit
502     DIT storing unit
503     dummy storing unit
504     switch control unit
800     content recording/reproducing system

1. First embodiment

The following describes a content recording/reproducing system 800 of a first embodiment of the present invention, with reference to the attached drawings.

1.1 Outline of the content recording/reproducing system 800

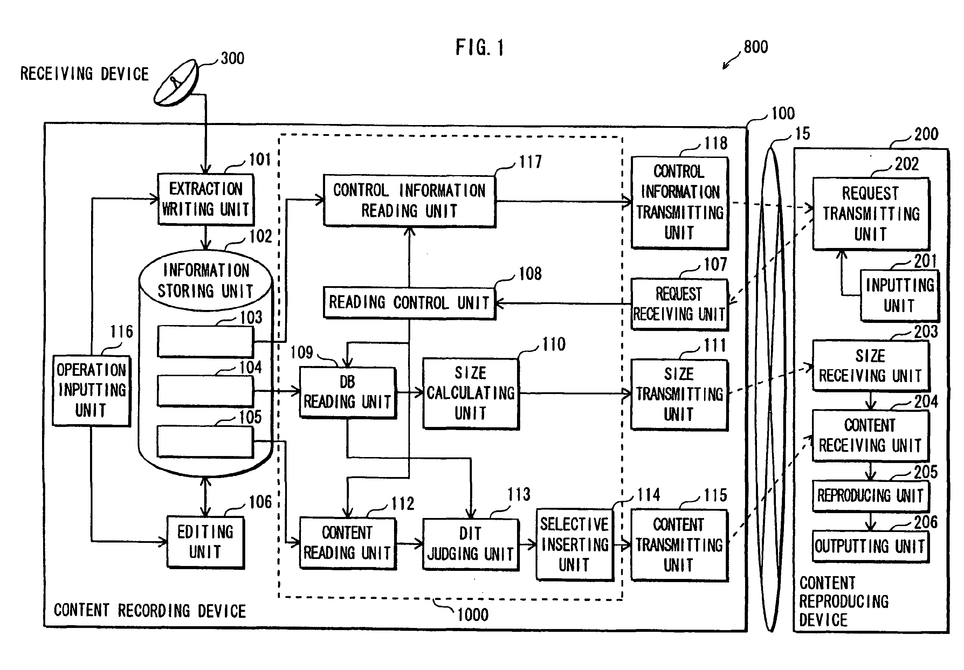

As shown in FIG. 1, the content recording/reproducing system 800 includes a receiving device 300, a content recording device 100, and a content reproducing device 200. The content recording device 100 and the content reproducing device 200 are connected to a network 15 (such as a LAN, a home network, or the like). The receiving device 300 is connected to the content recording device 100 with a cable.

The receiving device 300 includes an antenna, receives broadcast wave, generates an MPEG2-TS (Moving Picture Experts Group 2 Transport Stream) including a plurality of contents from the received broadcast wave, and outputs the generated MPEG2-TS (this is generally called a full stream) to the content recording device 100.
The content recording device 100 extracts packets relating to a specific channel from the full stream outputted from the receiving device 300. Such a stream composed of the packets of a part of the full stream is generally called a partial stream.

The content recording device 100 sequentially adds a 4-byte time stamp indicating an arrival time to the extracted packets, and writes the extracted packets in a recording medium included in the content recording device 100. In this case, the content recording device 100 monitors PSI (Program Specific Information) that is periodically inserted to the full stream to detect a discontinuous point of the content composed of the extracted packets. When detecting the discontinuous point, the content recording device 100 inserts DIT information immediately before the detected discontinuous point, and outputs the content to the recording medium.

Hereinafter, in the first embodiment, out of packets composing a content, a packet group in which time information is continuous is referred to as a continuous part, and the content includes a plurality of continuous parts. A front packet of each of continuous parts after a second continuous part is referred to as a discontinuous point.
Also, the content recording device 100 edits a content stored in the content recording device 100 by a user' s operation. For example, the content recording device 100 deletes a CM, connects only highlight scenes, and the like. The discontinuity of the time information also occurs in such editing. However, the DIT information is not inserted immediately before the discontinuous point occurring in this case. Therefore, the content stored in the content recording device 100 may include both the discontinuous point in which the DIT information has been inserted and the discontinuous point in which the DIT information has not been inserted.

Moreover, the content recording device 100 stores the number of packets (hereinafter, referred to as "packet count") of a content stored in the content recording device 100, and information indicating a position of the discontinuous point included in the content (hereinafter, referred to as discontinuous point information).
When the content reproducing device 200 requests the content recording device 100 to reproduce the content, the content recording device 100 reads the content. If the DIT information has not been inserted immediately before the discontinuous point of the read content, the content recording device 100 inserts the DIT information immediately before the discontinuous point. If the DIT information has been inserted immediately before the discontinuous point of the read content, the content recording device 100 inserts dummy information having a same data size as the DIT information immediately before the discontinuous point, and transmits the content. Note that a content that is actually transmitted is referred to as a transmission content in the following explanation.

As mentioned above, the content recording device 100 calculates an accurate file size of a transmission content by performing an easy operation using the number of the discontinuous points included in the content and the data size of the DIT information, before generating the transmission content.

1.2 Content recording device 100

FIG. 1 shows a functional structure of the content recording device 100. The content recording device 100 includes an extraction writing unit 101, an information storing unit 102, an editing unit 106, an operation inputting unit 116, a request receiving unit 107, a reading control unit 108, a DB reading unit 109, a size calculating unit 110, a size transmitting unit 111, a content reading unit 112, a DIT judging unit 113, a selective inserting unit 114, a content transmitting unit 115, a control information reading unit 117, and a control information transmitting unit 118.

More specifically, the content recording device 100 is a computer system including a microprocessor, a RAM, and a ROM. A computer program is stored in the RAM, the ROM, and the information storing unit 102. The content recording device 100 fulfills a part of a function thereof by the microprocessor operating in accordance with the computer program.

The following describes each of the structural components of the content recording device 100.

(1) Information storing unit 102

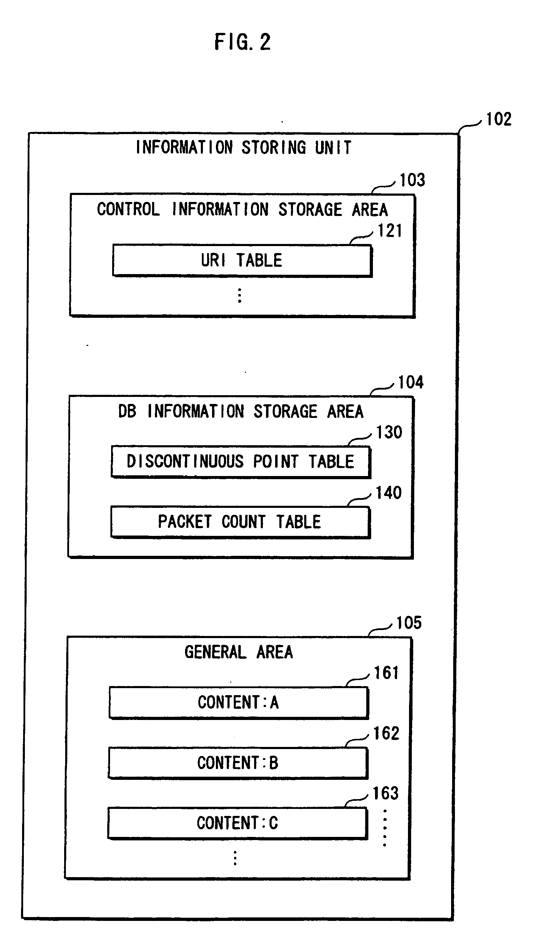

The information storing unit 102 is composed of a hard disk. As shown in FIGs . 1 and 2, the information storing unit 102 includes a control information storage area 103, a DB storage area 104, and a general area 105. FIG. 2 shows an example of information stored in each storage area.

As shown in FIG. 2, a plurality of contents 161, 162, 163, ⋯ are stored in the general area 105. The contents 161, 162, 163, ⋯ are generated by encoding a digital production composed of a moving image and an audio according to an MPEG2 format. "A", "B", and "C" in FIG. 2 are names of the contents respectively.

The control information storage area 103 stores a URI table 121. The URI table 121 has the pairs composed of an URI (Uniform Resource Identifier) of each of the contents stored in the general area 105 and the name of each of the contents in correspondence with each other. Although it is not shown in FIG. 2, various control information other than the URI table 121 are also stored in the control information storage area 103.

A discontinuous point table 130 and a packet count table 140 are stored in the DB storage area 104.

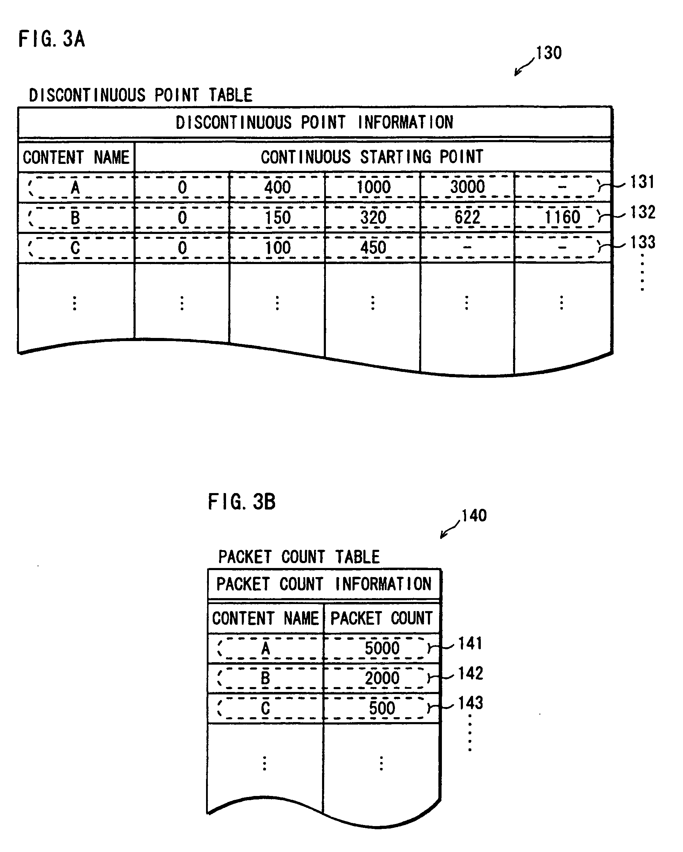

As shown in FIG. 3A, the discontinuous point table 130 includes a plurality of pieces of discontinuous point information 131, 132, 133, ⋯ , and each of the plurality of pieces of discontinuous point information 131, 132, 133, · · includes a content name and one or more continuous starting points. Each of the plurality of pieces of discontinuous point information 131, 132, 133, · · · corresponds to the contents stored in the general area 105.

The content name is a name of the corresponding content. The continuous starting point is a packet number of a front packet in a continuous part composing the corresponding content. The continuous part is a packet group in which the time information is continuous, out of a plurality of packets composing the content. The packet number indicates an ascending order from the front packet of the plurality of packets composing the content, and is assigned to the plurality of packets "0", "1", "2", · · · from the front packet. In this case, the continuous starting points other than "0" indicate the discontinuous points of the corresponding content.

As shown in FIG. 3B, the packet count table 140 includes a plurality of pieces of packet count information 141, 142, 143, · · · , and each of the plurality of pieces of packet count information 141, 142, 143, · · · includes a content name and a packet count. Also, each of the plurality of pieces of packet count information 141, 142, 143 corresponds to the contents stored in the general area 105.

The content name is a name of the corresponding content. The packet count is a total number of packets composing the corresponding content.

The following specifically describes the content 161 by taking it as an example. The content 161 whose content name is "A" corresponds to the discontinuous point information 131 composing the discontinuous point table 130 and the packet count information 141 composing the packet count table 140.

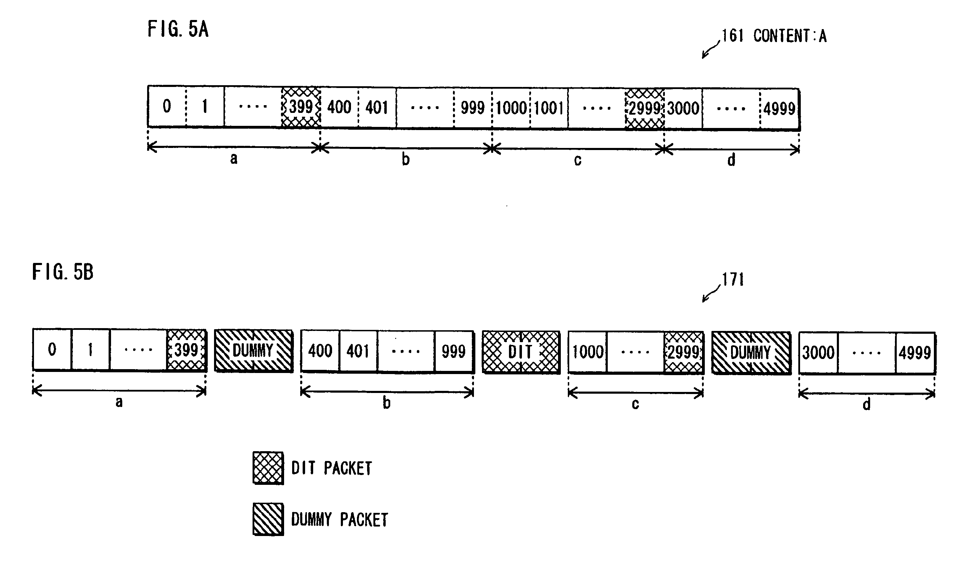

As shown by the packet count information 141, the content 161 is composed of 5000 packets. FIG. 5A shows a structure of the content 161, and in which the 5000 packets composing the content 161 are lined up from a front packet. Packet numbers "0", "1", "2", · · ·, "4999" are sequentially assigned to the 5000 packets from the front packet. A data size of each of the packets is 192 bytes.

The discontinuous point information 131 includes four continuous starting points "0", "400", "1000", and "3000". As shown in FIG. 5A, this indicates that each of packets whose packet numbers are "0", "400", "1000", and "3000" is a front packet of each of continuous parts "a", "b", "c", and "d" included in the content 161.

The front packets after a first continuous part, i.e. the packets whose packet numbers are "400", "1000", and "3000" are the discontinuous points of the content 161. Hereinafter, these packets whose packet numbers are "400", "1000", and "3000" are properly referred to as the discontinuous points "400", "1000", and "3000".

The content 161 includes the three discontinuous points. Out of the three discontinuous points, the discontinuous points "400" and "3000" occur when the content is recorded, and the DIT information has been inserted immediately before the discontinuous points. The discontinuous point "1000" occurs when the content is edited, and the DIT information has not been inserted immediately before the discontinuous point. A data size of the DIT information corresponds to two packets. Hereinafter, packets for transmitting the DIT information are referred to as DIT packets.

Although it is not specifically shown in the figures, the information storing unit 102 also stores various image data, programs, and the like in addition to the above information.

Note that in the first embodiment, the information storing unit 102 includes the DB storage area 104 that stores the discontinuous point table 130 and the packet count table 140. However, a recording medium independent from the information storing unit 102 may store the discontinuous point table 130 and the packet count table 140.

(2) Operation inputting unit 116

The operation inputting unit 116 includes various operation buttons such as a numeric keypad, a determination button, and the like. Also, the operation inputting unit 116 receives a button operation from a user, and outputs operation instruction information according to the received button operation to the extraction writing unit 101 or the editing unit 106.

For example, the operation inputting unit 116 outputs operation instruction information indicating a change of a received channel and a start and a stop of a recording to the extraction writing unit 101, and outputs editing instruction information instructing editing of a content stored in the information storing unit 102 (deletion of a CM part and the like) to the editing unit 106.

(3) Extraction writing unit 101

The extraction writing unit 101 generally receives a full stream received by the receiving device 300, and monitors PSI that is periodically included in the received full stream.

The PSI includes a PAT (Program Association Table), a PMT (Program Map Table), a NIT (Network Information Table), CAT (Conditional Access Table), and the like. The PAT is a table which represents the relationship between each channel number and the PID (Packet ID) of a packet for transmitting the PMT corresponding to the channel, and is transmitted by a packet whose PID = 0. The PMT includes a channel number of a certain channel, and PIDs of packets (an Audio packet, a Video packet, a PCR packet, and the like) composing a content of the certain channel. The NIT includes a physical network parameter such as a frequency. The CAT includes information relating to conditional access such as a pay broadcast and copy control. The PAT and the PMT specify packets relating to each channel, and are received at intervals of within 100ms.

The extraction writing unit 101 refers to the PAT to select a PMT corresponding to a specified channel. Then, the extraction writing unit 101 refers to the selected PMT to extract packets relating to the specified channel from a full stream. Although a size of each of packets composing the full stream is 188 bytes, the extraction writing unit 101 adds a 4-byte time stamp indicating an arrival time in the content recording device 100 to each of the extracted packets. After the time stamp is added, the extraction writing unit 101 sequentially transmits the packets to the content reproducing device 200 via the content transmitting unit 115. Although it is not shown in the figures, the extraction writing unit 101 may output the packets to a reproducing device directly connected to the content recording device 100.

In the middle of the reception of the full stream or the extraction, a content of a PAT or a PMT that is newly obtained by the extraction writing unit 101 may be different from a content of a PAT or a PMT that is obtained immediately before the reception or the extraction. For example, if a channel is changed by a user's operation, a PID of a newly obtained PMT is different from a PID of a PMT received immediately before the change. Also, if an audio is switched from monaural to stereo, a PID of an Audio packet included in a newly obtained PMT is different from a PID of an Audio packet included in a PMT obtained immediately before the switch.

In this case, the extraction writing unit 101 generates the DIT information indicating that the time information is discontinuous, generates DIT packets including the generated DIT information in a payload part, and outputs the generated DIT packets. A header of each DIT packet includes a specific PID indicating the DIT packets. In the same manner as this, after outputting the DIT packets, the extraction writing unit 101 continues outputting the packet extracted by referring to the PAT and the PMT.

Also, the extraction writing unit 101 receives operation instruction information instructing a start of a recording from the operation inputting unit 116. When receiving the operation instruction information indicating the recording start, the extraction writing unit 101 extracts the packets from the full stream and generates the DIT packets in the same procedure as in the above general case. Then, the extraction writing unit 101 sequentially writes these packets in the general area 105 of the information storing unit 102. At the same time, the extraction writing unit 101 counts the packet numbers of the written packets.

In parallel with the writing of the packets, when receiving the operation instruction information indicating the recording start, the extraction writing unit 101 generates new discontinuous point information, and adds the generated discontinuous point information to the discontinuous point table 130. In this case, the newly generated discontinuous point information is composed of a content name and a continuous starting point "0". The content name included in the newly generated discontinuous point information may be a recording starting time, as an example. Also, the content name may be a title of a broadcast program that is being recorded, which is obtained from an EPG.

When discontinuity of the time information occurs while recording the content, the extraction writing unit 101 adds a packet number of a packet next to the DIT packets to the newly generated discontinuous point information as a continuous starting point, in parallel with generating and writing of the DIT packets.

In doing so, the extraction writing unit 101 continues writing of the packets and the DIT packets, counting of the packet numbers, and adding of the continuous starting point, until a user performs a button operation that instructs a recording stop.

When receiving the operation instruction information indicating the recording stop from the operation inputting unit 116 while recording the content, the extraction writing unit 101 stops writing the packets in the information storing unit 102. Note that a packet group written in the general area 105 of the information storing unit 102 from the recording start to the recording stop is defined as one content.

Then, the extraction writing unit 101 adds one to a packet number of a packet written in the general area 105 for the last time to calculate the packet count. Also, the extraction writing unit 101 reads a content name from the newly added discontinuous point information, generates packet count information including the read content name and the calculated packet count, and adds the generated packet count information to the packet count table 140 stored in the DB storage area 104.

Next, the extraction writing unit 101 generates a URI corresponding to the new content, and adds the read content name and the generated URI to the URI table 121 stored in the control information storage area 103.

(4) Editing unit 106

The editing unit 106 receives, from the operation inputting unit 116, editing instruction information instructing editing of the content stored in the information storing unit 102. Here, the editing instruction information received by the editing unit 106 includes a content name of a content as an editing target and a packet number of a packet as a deletion target.

The following specifically describes a case where the editing unit 106 receives the editing instruction information including a content name "C" and packet numbers "301 to 400".

As shown in FIG. 3, at a point in time before editing the content, the discontinuous point information 133 corresponding to the content 163 whose content name is "C" includes continuous starting points "0", "100", and "450". Also, as shown by the packet count information 143 corresponding to the content 163, the content 163 is composed of 500 packets.

When receiving the editing instruction information, the editing unit 106 deletes the packets whose packet numbers are "301 to 400" from the packets composing the content 163. Then, the editing unit 106 adds the packet number "301" that is a front packet number of the deletion target packet numbers "301 to 400" to the discontinuous point information 133. Next, the editing unit 106 compares the packet number "400" that is a last packet number of the deletion target packet numbers with each of the continuous starting points, and detects a continuous starting point "450" that is larger than the packet number "400". The editing unit 106 subtracts the deleted packet count "100" from the detected continuous starting point "450". Also, the editing unit 106 subtracts the deleted packet count "100" from the packet count "500" included in the packet count information 143.

The discontinuous point information 133 after the editing includes the continuous starting points "0", "100", "301", and "350", and the packet count information 143 includes the packet count "400".

(5) Request receiving unit 107

The request receiving unit 107 includes a network connection IF, and receives various requests from the content reproducing device 200 via the network 15. Examples of the various requests are a URI request for requesting a location of a content held by the content recording device 100, a reproduction request for reproducing the content, a content transmission request for requesting a transmission of the content, and the like. Here, the URI request is transmitted and received according to UPnP specifications, and the reproduction request and the content transmission request are transmitted and received according to the HTTP.

When receiving these requests, the request receiving unit 107 outputs the received requests to the reading control unit 108.

(6) Reading control unit 108

The reading control unit 108 receives the various requests from the request receiving unit 107 and analyzes the received requests to judge contents of the requests. Then, the reading control unit 108 instructs the control information reading unit 117, the DB reading unit 109, and the content readingunit 112 to read the contents according to the contents.
When receiving the URI request, the reading control unit 108 instructs the control information reading unit 117 to read the URI table 121.
When receiving the reproduction request, the reading control unit 108 instructs the DB reading unit 109 to read the discontinuous point information and the packet count information corresponding to a content that is a target of the received reproduction request.
When receiving the content transmission request, the reading control unit 108 instructs the content reading unit 112 to read a content that is a target of the received content transmission request.

(7) Control information reading unit 117

The control information reading unit 117 reads the URI table 121 from the control information storage area 103 of the information storing unit 102, according to the instruction from the reading control unit 108. Then, the control information reading unit 117 outputs the read URI table 121 to the control information transmitting unit 118.

(8) Control information transmitting unit 118

The control information transmitting unit 118 includes a network connection IF and receives the URI table 121 from the control information reading unit 117. When receiving the URI table 121, the control information transmitting unit 118 transmits the received URI table 121 to the content reproducing device 200 via the network 15.

(9) DB reading unit 109

The DB reading unit 109 reads the corresponding discontinuous point information and the packet count information from the discontinuous point table 130 and the packet count table 140 stored in the DB storage area 104 in the information storing unit 102, according to the instruction from the reading control unit 108. Then, the DB reading unit 109 outputs the read discontinuous point information and the packet count information to the size calculating unit 110 and the DIT judging unit 113.

(10) Size calculating unit 110

The size calculating unit 110 stores a data size "192 bytes" of each of packets composing a content stored in the information storing unit 102. Also, the size calculating unit 110 stores a packet number "2" for transmitting one piece of DIT information in the selective inserting unit 114.
The size calculatingunit 110 receives the discontinuous point information and the packet count information from the DB reading unit 109. Then, the size calculating unit 110 counts the number of the continuous starting points other than "0" included in the received discontinuous point information, i.e. the number of the discontinuous points included in the content corresponding to the received discontinuous point information.
Next, the size calculating unit 110 calculates a packet count of a transmission content generated based on the content correspondingto the receiveddiscontinuous point information and the packet count information, using the following formula 1. Note that a structure of the transmission content will be described later.
$$TP = P1 + Dp \times n \cdots (formula\ 1)$$

Here, TP indicates the packet count of the transmission content P1 indicates the packet count included in the packet count information, Dp indicates the packet count "2" of the DIT information stored by the size calculating unit 110, and n indicates the counted number of the discontinuous points.
Then, the size calculating unit 110 multiplies the calculated packet count of the transmission content TP by the stored data size "192 bytes" to calculate a file size of the transmission content.
Next, the size calculating unit 110 transmits the calculated file size to the content reproducing device 200 via the network 15 and the size transmitting unit 111.

(11) Size transmitting unit 111

The size transmitting unit 111 includes a network connection IF. The size transmitting unit 111 receives the file size from the size calculating unit 110. Then, the size transmitting unit 111 transmits the received file size to the content reproducing device 200 via the network 15. Here, the file size is transmitted and received according to the HTTP.

(12) Content reading unit 112

The content reading unit 112 reads the content stored in the general area 105 of the information storing unit 102, according to the instruction from the reading control unit 108. Then, the content readingunit 112 outputs the read content to the DIT judging unit 113.

(13) DIT judging unit 113

The DIT judging unit 113 has stored a PID specific to the DIT packets.
The DIT judging unit 113 receives the discontinuous point information and the packet count information from the DB reading unit 109. For convenience of explanation, $(n + 1)$ continuous starting points included in the received discontinuous point information are expressed as "Si $(0 \leq i \leq n)$ ". As shown in FIG. 3, "S0" is always 0.
Then, the DIT judging unit 113 receives the content corresponding to the discontinuous point information previously received from the content reading unit 112. More specifically, the DIT judging unit 113 sequentially receives the packets composing the content from the front packet, and counts the packet numbers of the received packets from a packet number 0.
The DIT judging unit 113 specifies a packet whose packet number is "Si - 1", i.e. a packet immediately before the discontinuous point, based on the continuous starting points included in the received discontinuous point information. The DIT judging unit 113 outputs packets whose packet numbers are not identical to "Si - 1" to the selective inserting unit 114.
The DIT judging unit 113 extracts a PID from a header of the specified packet immediately before the discontinuous point. Then, the DIT judging unit 113 compares the extracted PID with the PID specific to the DIT packets stored in the DIT judging unit 113 to judge whether or not the specified packet is the DIT packets. When the extracted PID is identical to the PID specific to the DIT packets stored in the DIT judging unit 113, the specified packet is a member of the DIT packets. On the other hand, when the extracted PID is not identical to the PID specific to the DIT packets stored in the DIT judging unit 113, the specified packet is not a member of the DIT packets.
When the specified packet is a member of the DIT packets, the DIT judging unit 113 outputs the specified packet and a signal indicating that the DIT information has been inserted (hereinafter, referred to as "inserted signal") to the selective inserting unit 114. When the specified packet is not a member of the DIT packets, the DIT judging unit 113 outputs the specified packet and a signal indicating that the DIT information has not been inserted (hereinafter, referred to as "non-inserted signal") to the selective inserting unit 114.

(14) Selective inserting unit 114

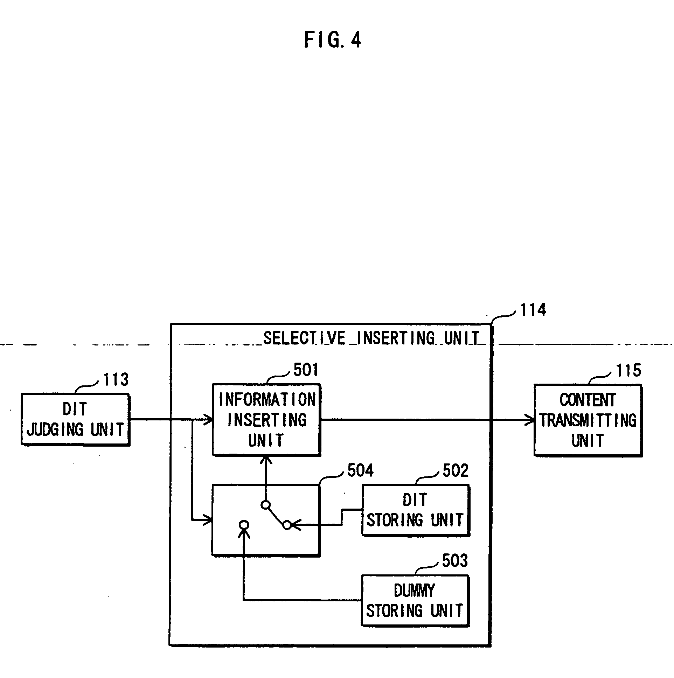

The selective inserting unit 114 receives a content and an inserted signal or a non-inserted signal corresponding to each of the discontinuous points included in the content from the DIT judging unit 113. Then, the selective inserting unit 114 inserts one set of DIT packets or two dummy packets in each of the discontinuous points according to the received inserted signal or the non-inserted signal to generate the transmission content, and outputs the generated transmission content to the content transmitting unit 115. As shown in FIG. 4, the selective inserting unit 114 includes an information inserting unit 501, a DIT storing unit 502, a dummy storing unit 503, and a switch control unit 504. The following describes each of these structural components.
The DIT storing unit 502 stores DIT packets for transmitting the DIT information. As previously mentioned above, a data size of the DIT information is the same as a data size of two packets. Therefore, a data size of the DIT packets stored in the DIT storing unit 502 is the same as a size of two packets. Note that any discontinuous point in which the DIT information is inserted occurs by the editing. Therefore, the same discontinuity information can be inserted.
The dummy storing unit 503 stores dummypackets including predetermined dummy information. The dummy information has the same data size as the DIT information, and the number of the dummy packets stored by the dummy storing unit 503 is two. A header of the dummy packet includes a PID specific to the dummy packet. Here, a dummy packet defined in ISO/IEC13818-1 is used.
The switch control unit 504 functions as a switch that connects any one of the DIT storing unit 502 and the dummy storing unit 503 to the information inserting unit 501, and disconnects the other one of the DIT storing unit 502 and the dummy storing unit 503 from the information inserting unit 501.

The switch control unit 504 receives the inserted signal or the non-inserted signal from the DIT judging unit 113. When receiving the inserted signal, the switch control unit 504 connects the informati.on inserting unit 501 to the dummy storing unit 503. When receiving the non-inserted signal, the switch control unit 504 connects the information inserting unit 501 to the DIT storing unit 502.

The information inserting unit 501 receives the packet and the inserted signal, the packet and the non-inserted signal, or only the packet from the DIT judging unit 113.

When receiving only the packet, the information inserting unit 501 outputs the received packet to the content transmitting unit 115.

When receiving the packet and the inserted signal, the information inserting unit 501 reads the dummy packets from the dummy storing unit 503 and outputs the received packet to the content transmitting unit 115. Immediately after outputting the received packet, the information inserting unit 501 outputs the read dummy packets to the content transmitting unit 115.

When receiving the packet and the non-inserted signal, the information inserting unit 501 reads the DIT packets from the DIT storing unit 502 and outputs the received packet to the content transmitting unit 115. Immediately after outputting the received packet, the information inserting unit 501 outputs the read DIT packets to the content transmitting unit 115.

(15) Content transmitting unit 115

The content transmitting unit 115 includes a network connection IF. The content transmitting unit 115 receives the transmission content from the selective inserting unit 114. Then, the content transmitting unit 115 transmits the received transmission content to the content reproducing device 200 via the network 15.

More specifically, the content transmitting unit 115 sequentially receives, from the selective inserting unit 114, the packets composing the transmission content from the front packet, and transmits the received packets in the order of the reception. Here, the content transmitting unit 115 transmits the transmission content according to the HTTP.

1.3 Content reproducing device 200

As shown in FIG. 1, the content reproducing device 200 includes an inputting unit 201, a request transmitting unit 202, a size receiving unit 203, a content receiving unit 204, a reproducing unit 205, and an outputting unit 206.

More specifically, the content reproducing device 200 is a computer system including a microprocessor, a RAM, and a ROM. A computer program is stored in the RAM and the ROM. The content reproducing device 200 fulfills a part of a function thereof by the microprocessor operating in accordance with the computer program.

The following describes each of the structural components of the content reproducing device 200.

(1) Inputting unit 201

The inputting unit 201 includes a power button, a numeric keypad, a determination button, a reproduction button, and the like. Also, the inputting unit 201 receives a button operation of these buttons from a user, and outputs operation instruction information according to the received button operation to the request transmitting unit 202 or the reproducing unit 205.

(2) Request transmitting unit 202

The request transmitting unit 202 includes a network connection IF.

The request transmitting unit 202 receives various operation instruction information from the inputting unit 201. Also, the request transmitting unit 202 detects that the content reproducing device 200 is connected to the network 15 (the content reproducing device 200 is connected to a LAN cable, for example).

When detecting that the content reproducing device 200 is connected to the network 15, the request transmitting unit 202 transmits a URI request for requesting a location of a content held by the content recording device 100, to the content recording device 100 via the network 15. Then, the request transmitting unit 202 receives a URI table from the content recording device 100. When receiving the URI table, the request transmitting unit 202 writes the received URI table in a storing unit (not shown). With regard to such an initial operation immediately after the connection to the network, UPnP (Universal Plug and Play) can be used. Because the UPnP is publicly known, the explanation thereof will be omitted here.

When receiving operation instruction information indicating holding down of the reproducing button and a content name of a reproduction target, the request transmitting unit 202 reads a URI corresponding to the received content name from the URI table, and transmits a reproduction request including the read URI to the content recording device 100.

Then, the request transmitting unit 202 receives a reception signal indicating that a file size is received, from the size receiving unit 203. Then, the request transmitting unit 202 transmits a content transmission request for requesting a transmission of the content to the content recording device 100 via the network 15.

(3) Size receiving unit 203

The size receiving unit 203 receives the file size of the transmission content from the content recording device 100 via the network 15. Then, the size receiving unit 203 outputs the received file size to the content receiving unit 204. Next, the size receiving unit 203 outputs the reception signal indicating that the file size is received, to the request transmitting unit 202.

(4) Content receiving unit 204

The content receiving unit 204 receives the file size of the transmission content from the size receiving unit 203. Then, the content-receiving unit 204 receives the transmission content from the content recording device 100 via the network 15, and outputs the received transmission content to the reproducing unit 205. More specifically, the content receiving unit 204 sequentially receives the packets composing the transmission content from a front packet, and sequentially outputs the received packets to the reproducing unit 205. When receiving data corresponding to the file size received from the size receiving unit 203, the content receiving unit 204 completes receiving the packets.

(5) Reproducing unit 205

The reproducing unit 205 stores a PID specific to a dummy packet.
The reproducing unit 205 sequentially receives the packets composing the transmission content from the content receiving unit 204. At this time, when a PID included in a header of the received packets is identical to the PID specific to the dummy packet that has been stored in the reproducing unit 205, the reproducing unit 205 removes such packets.
The reproducing unit 205 extracts Audio data, Videodata, PCR, and DIT information included in the received packets, and decodes the Audio data and the Video data while these pieces of data are synchronized based on the PCR and the DIT information, to generate display screen data and output audio data. Then, the reproducing unit 205 outputs the generated display screen data and the output audio data to the outputting unit 206.
Also, the reproducing unit 205 receives various operation instruction information other than the playback instruction from the inputting unit 201. Then, the reproducing unit 205 generates display screen data and output audio data according to the received operation instruction information, and outputs the generated display screen data and the output audio data to the outputting unit 206. For example, when receiving operation instruction information requesting the list display of the content from the inputting unit 201, the reproducing unit 205 reads the image data stored in the storing unit (not shown) and the content name included in the URI table. Then, the reproducing unit 205 generates the display screen data for displaying the list of the content name based on the read image data and the content name, and outputs the generated display screen data to the outputting unit 206.

(6) Outputting unit 206

The outputting unit 206 includes a display and a speaker. The outputting unit 206 receives the display screen data and the output audio data from the reproducing unit 205. Then, the outputting unit 206 generates a display screen based on the received display screen data and displays the generated display screen on a display. Also, the outputting unit 206 generates an audio based on the received output audio data and outputs the audio from the speaker.
Note that the outputting unit 206 itself includes the display and the speaker here. However, the outputting unit 206 may include output terminals connectable to an external display and a speaker, cause the display to display the display screen, and cause the speaker to output the audio.

1.4 Operation

The following describes an operation of each of the content recording device 100 and the content reproducing device 200, with reference to the attached drawings.

(1) Generation of transmission content

As previously described above, FIG. 5A shows the structure of the content 161 stored in the general area 105 of the information storing unit 102. FIG. 5B shows a structure of a transmission content 171 generated based on the content 161. In FIG. 5B, hatching packets are DIT packets and shaded packets are dummy packets.

The following describes processing of generating the transmission content 171 performed by the DIT judging unit 113 and the selective inserting unit 114, with reference to FIG. 5.

As shown in FIG. 5A, out of the three discontinuous points included in the content 161, immediately before the discontinuous points "400" and "3000", the DIT packets have been inserted. On the other hand, immediately before the discontinuous point "1000", the DIT packets have not been inserted.

The DIT judging unit 113 temporarily stores the continuous starting points "400", "1000", and "3000" other than "0" included in the discontinuous point information 131 corresponding to the content 161.

The DIT judging unit 113 sequentially receives the packets composing the content 161 from a front packet, from the content reading unit 112. The packets whose packet numbers are 0 to 398 are outputted to the content transmitting unit 115 after passing through the DIT judging unit 113 and the selective inserting unit 114.

The DIT judging unit 113 specifies a packet whose packet number is "399", i.e. a packet immediately before the discontinuous point "400", based on the continuous starting point "400". Then, the DIT judging unit 113 extracts a PID from the specified packet whose packet number is "399". It can be judged that this packet is a member of the DIT packets based on the extracted PID. The DIT judging unit 113 outputs the inserted signal to the selective inserting unit 114 to notify the selective inserting unit 114 that the specified packet is a member of the DIT packets.

The selective inserting unit 114 receives the inserted signal and inserts two dummy packets between the packet whose packet number is 399 and a packet next to the packet.

Then, the packets whose packet numbers are 400 to 998 are outputted to the content transmitting unit 115 after passing through the DIT judging unit 113 and the selective inserting unit 114.

The DIT judging unit 113 specifies a packet whose packet number is "999", i.e. a packet immediately before the discontinuous point "1000", based on the continuous starting point "1000". Then, the DIT judging unit 113 extracts a PID from the specified packet whose packet number is "999". It can be judged that this packet is not a member of the DIT packets based on the extracted PID. The DIT judging unit 113 outputs the non-inserted signal to the selective inserting unit 114 to notify the selective inserting unit 114 that the specified packet is not a member of the DIT packets.

The selective inserting unit 114 receives the non-inserted signal and inserts one set of the DIT packets between the packet whose packet number is 999 and a packet next to the packet.

With regard to the discontinuous point "3000", the same procedure as in the case of the discontinuous point "400" is performed. That is to say, a packet immediately before the discontinuous point "3000" is specified, the specified packet is judged to be a member of the DIT packets, and dummy packets are inserted between the specified packet and a packet next to the specified packet. Then, packets included in a continuous part "d" are outputted to the content transmitting unit 115 after passing through the DIT judging unit 1133 and the selective inserting unit 114.

As shown in FIG. 5B, in the transmission content generated as mentioned above, immediately before all of the discontinuous points, one set of DIT packets or two dummy packets are newly inserted.

(2) Operation of reproducing a content performed by the content recording/reproducing system 800

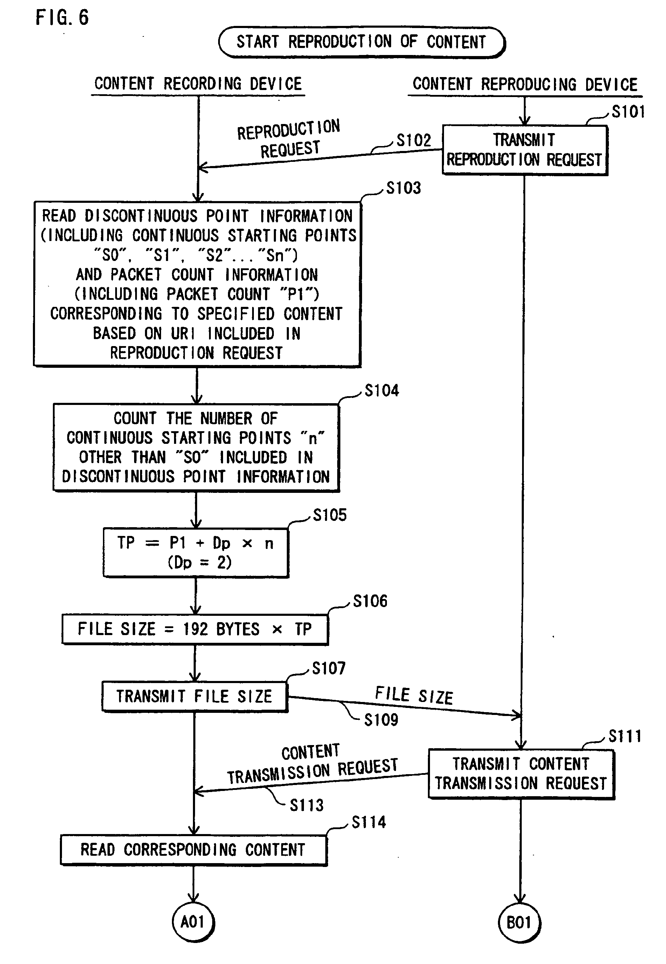

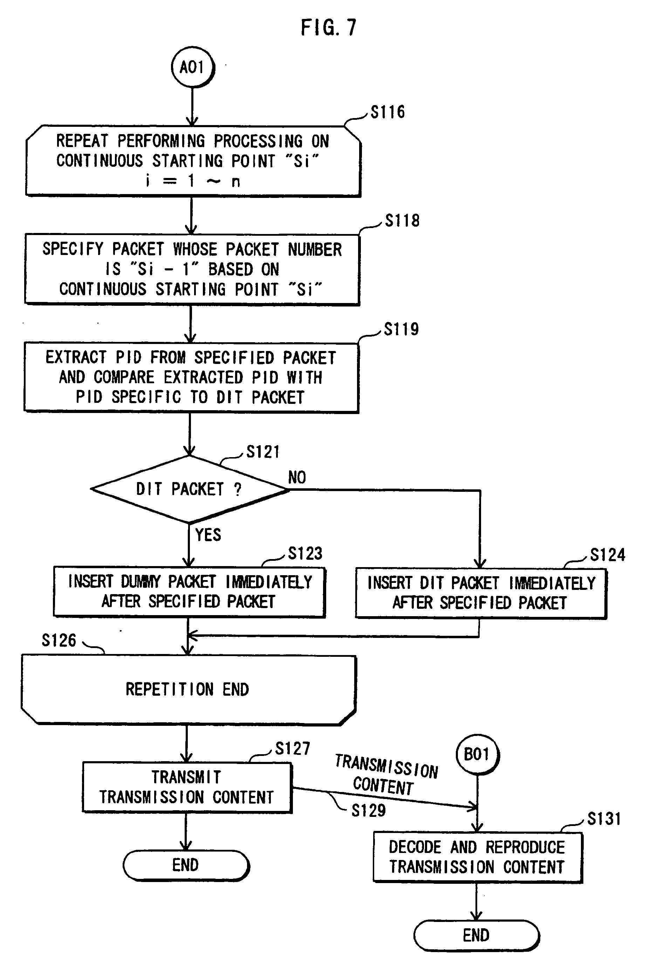

FIGs. 6 and 7 are flowcharts each showing an operation of reproducing a content performed by the content recording/reproducing system 800. The following describes the operation of reproducing the content performed by the content recording/reproducing system 800, with reference to FIGs. 6 and 7. Note that the content reproducing device 200 has already been connected to the network 15 at this time, and has already received the URI table from the content recording device 100.

When instructed to reproduce a content by a user's button operation, the request transmitting unit 202 of the content reproducing device 200 outputs the reproduction request to the content recording device 100 via the network 15 (step S101). The reproduction request here is performed using HTTP HEAD. More specifically, suppose that an IP address of the content recording device 100 is 192. 168. 0.3, the port number is 8085, and a URI of the content specified by the user is http://192.168.0.3:8035/AVData/0001.m2ts, data having the following format is transmitted.

HEAD http://192.168.0.3:8085/AVData/0001.m2ts HTTP/1.1 Host: 192.168.0.3

Date: Thr Jun 9 15:00:00 2005 JST

User-Agent: AVT Client

Connection: Keep-Alive

The request receiving unit 107 of the content recording device 100 receives the reproduction request from the content reproducing device 200 via the network 15 (step S102), and outputs the received reproduction request to the reading control unit 108. When receiving the reproduction request, the reading control unit 108 analyzes the received reproduction request, and instructs the DB reading unit 109 to read the discontinuous point information and the packet count information corresponding to the specified content, based on the URI "http://192.168.0.3:8085/AVData/0001.m2ts" included in the reproduction request. The DB reading unit 109 reads the discontinuous point information and the packet count information corresponding to the specified content, according to the instruction from the reading control unit 108 (step S103). The DB reading unit 109 outputs the read discontinuous point information and the packet count information to the size calculating unit 110. Suppose that the read discontinuous point information includes (n + 1) continuous starting points "S0" "S1", "S2", · · ·, "Sn". Here, "n" represents an integer of 0 or more, and "S0 is always "0" as shown in FIG. 3A. Also, suppose that the read packet count information includes a packet count "P1".

The size calculating unit 110 receives the discontinuous point information and the packet count information from the DB reading unit 109, and counts the number of the continuous starting points other than "S0" included in the received discontinuous point information to obtain the number of the discontinuous points "n" included in the specified content (step S104). Then, the size calculating unit 110 calculates the packet count TP of the transmission content using the above mentioned formula 1 : TP = P1 + Dp X n (step S105) . Also, the size calculating unit 110 multiplies the calculated packet count TP by 192 bytes that is a data size of one packet to calculate the file size of the transmission content (step S106). Then, the size calculating unit 110 transmits the calculated file size to the content reproducing device 200 via the size transmitting unit 111 and the network 15 (step S107).

The file size is transmitted and received according to the HTTP. More specifically, suppose that the calculated file size is 192000 bytes, data having the following format is transmitted.

HTTP/1.1 200 OK
Date: Thr Jun 9 15:00:01 2005 JST
Server: AVT Server
Connection: Keep-Alive
Content-Type: video/vnd.dlna-mpeg-tts
Content-Length: 192000
"Content-Length" represents the calculated file size.

The size receiving unit 203 of the content reproducing device 200 receives the file size from the content recording device 100 via the network 15 (step S109). When receiving the file size, the size receiving unit 203 outputs the received file size to the content receiving unit 204, and outputs a reception signal to the request transmitting unit 202.

When receiving the reception signal, the request transmitting unit 202 transmits a content transmission request to the content recording device 100 via the network 15 (step S111) . More specifically, data having the following format is transmitted using HTTP GET.

GET http://192.168.0.3:8085/AVData/0001.m2ts HTTP/1.1 Host: 192.168.0.3
Date: Thr Jun 9 15:00:00 2005 JST
User-Agent: AVT Client
Connection: Keep-Alive

The request receiving unit 107 of the content recording device 100 receives the content transmission request from the content reproducing device 200 via the network 15 (step S113). When receiving the content transmission request, the request receiving unit 107 outputs the received content transmission request to the reading control unit 108.

The reading control unit 108 receives the content transmission request from the request receiving unit 107, analyzes the received content transmission request, and instructs the content reading unit 112 to read the content stored in the URI "http://192.168.0.3:8085/AVData/0001.m2ts". The content reading unit 112 reads the corresponding content from the general area 105 of the information storing unit 102, according to the instruction from the reading control unit 108 (step S114). More specifically, the content reading unit 112 sequentially reads the packets composing the corresponding content from a front packet and sequentially outputs the read packets to the DIT judging unit 113.

Next, in steps S116 to S126, the DIT judging unit 113 and the selective inserting unit 114 repeat performing processing in the steps S118 to S124 on the continuous starting points "Si" (i = 1 to n) included in the discontinuous point information read by the DB reading unit 109, and generates the transmission content based on the read content. The DIT judging unit 113 specifies a packet whose packet number is "Si-1" based on the continuous starting point "Si" (step S118). Then, the DIT judging unit 113 extracts a PID from the specified packet and compares the extracted PID with the stored PID specific to the DIT packets (step S119). When the extracted PID is identical to the stored PID, the specified packet is a member of the DIT packets.

When the specified packet is a member of the DIT packets ("YES" in step S121), the DIT judging unit 113 outputs an inserted signal to the selective inserting unit 114. The selective inserting unit 114 receives the inserted signal and inserts two dummy packets immediately after the packet specified by the DIT judging unit 113 (step S123). When the specified packet is not a member of the DIT packets ("NO" in step S121), the selective inserting unit 114 inserts one set of DIT packets immediately after the packet specified by the DIT judging unit 113 (step S124).

When the processing in the steps S118 to S124 have been performed on all of the continuous starting points and the transmission content is generated, the content transmitting unit 115 transmits the generated transmission content to the content reproducing device 200 via the network 15 (step S127) More specifically, information having the following structure is transmitted.

HTTP/1.1 200 OK
Date: Thr Jun 9 15:00:01 2005 JST

Server: AVT Server
Connection: Keep-Alive
Content-Type: video/vnd.dlna-mpeg-tts
Content-Length: 192000
(empty line)
[192000 bytes of data]
In this case, 192000 bytes of data is the transmission content.

The content receiving unit 204 of the content reproducing device 200 receives the transmission content via the network 15 (step S129), and outputs the received transmission content to the reproducing unit 205.
The reproducing unit 205 decodes the received transmission content and causes the display and the speaker included in the outputting unit 206 to reproduce a moving image and an audio (step S131).

1.5 Conclusion and effect

As mentioned above, when receiving the content transmission request from the content reproducing device 200, the content recording device 100 composing the content recording/reproducing system 800 of the first embodiment inserts any of DIT packets and two dummy packets in all of the discontinuous points included in the content to generate the transmission content. Then, the content recording device 100 transmits the generated transmission content to the content reproducing device 200.

Therefore, the content recording device 100 can quickly obtain the file size of the transmission content before generating and transmitting the transmission content. Also, the file size is obtained by performing easy multiplication and addition based on the number of the discontinuous points of the content and the number of the packets composing the content, without searching each of the packets composing the content.

2. Modification

Up to now, the present invention has been described specifically through the above-described embodiment. However, the technical scope of the present invention is not limited to the above-described embodiment. For example, the following are modifications.

(1) In the first embodiment, the content recording device 100 is a device that can perform recording, editing, and transmission of a content. However, separate devices may perform each of the recording, editing, and transmission of the content. For example, the present invention may be a system including an output device that transmits a content stored in a hard disk to the content reproducing device 200, a device that receives a full stream from a receiving device and writes a content relating to a predetermined channel in the hard disk, and a device that edits the content according to a user's operation. As described in the first embodiment, the output device calculates and transmits the file size of the transmission content, and generates and transmits the transmission content.

(2) In the first embodiment, out of the plurality of continuous parts composing a content, a front packet of each of the continuous parts after the first continuous part is defined as the discontinuous point. Therefore, when the time information is discontinuous while recording the content, a packet next to the DIT packets inserted by the extraction writingunit 101 is the discontinuous point, and the extraction writing unit 101 has written a packet number of this packet in the discontinuous point information as a continuous starting point.

However, the present invention is not limited to the above procedure. When the time information is discontinuous while recording the content, the extraction writing unit 101 may write a packet number of the inserted DIT packets in the discontinuous point information as a continuous starting point.
In this case, the DIT judging unit 113 judges whether or not the continuous starting point, i.e. a packet whose packet number is "Si" is a member of the DIT packets. When receiving the packet and the inserted signal, or the packet and the non-inserted signal from the DIT judging unit 113, the information inserting unit 501 composing the selective inserting unit 114 outputs the dummy packets or the DIT packets immediately before the received packet.

(3) In the first embodiment, the content reproducing device 200 transmits the reproduction request to the content recording device 100, and then transmits the content transmission request. However, the content reproducing device 200 may transmit only a content transmission request including the contents of both of the reproduction request and the content transmission request. This can be realized by using HTTP GET.

(4) If detecting the discontinuous point when writing a content in the information storing unit 102, the extraction writing unit 101 of the content recording device 100 inserts the DIT packets in the detected discontinuous point and writes the content. However, the present invention is not limited to this, and may have a construction in which the DIT packets are not inserted in the detected discontinuous point when the content is written. In this case, the extraction writing unit 101 generates the discontinuous point information and adds the generated discontinuous point information to the discontinuous point table. When the content is transmitted to the content reproducing device 200, the extraction writing unit 101 inserts the DIT packets in all discontinuous points and transmits the content.

(5) It has been described that the information storing unit 102 of the content recording device 100 is composed of a hard disk unit. However, the information storing unit 102 may be composed of a removable optical disk and an output unit that writes and reads information in and from the optical disk. In this case, a user attaches and removes the optical disk if needed.

Also, the information storing unit 102 may be composed of a plurality of optical disks and a disk changer that automatically exchanges these optical disks.

(6) The present invention includes a case in which the following structural components are implemented as LSI (Large Scale Integration) that is an integrated circuit. The structural components are surrounded by a broken line 1000 in FIG. 1 out of the structural components of the content recording device 100, i.e. the reading control unit 108, the DB reading unit 109, the size calculating unit 110, the content reading unit 112, the DIT judging unit 113, the selective inserting unit 114, and the control information reading unit 117. These structural components may be separately integrated into one chip, or may be integrated into one chip so as to include a part or all of these structural components. Although it is mentioned as LSI here, it is also referred to as IC, system LSI, super LSI, or ultra LSI, in accordance with an integration degree.

Also, the method of integrating the circuit is not limited to LSI, and a dedicated circuit, or a general-purpose processor may be used. FPGA (Field Programmable Gate Array) that can be programmed after manufacturing LSI, and a reconfigurable processor that can reconfigure the connection and the setting of the circuit cell in LSI may be used. Furthermore, if a new technology of integrating the circuit instead of LSI is developed by the progress of a semiconductor technology or the other technology derived from the semiconductor technology, it is a matter of course that a functional block is integrated by using the new technology. The adaptation of biotechnology can be considered as the possibility.

(7) A part or all of the component parts that construct each device of the present invention may be constructed by an IC card which is removable from each device or a single module. The IC card or the module is a computer system which is constructed by a microprocessor, a ROM, a RAM, or the like. The IC card or the module may include the highly functional LSI. Because the microprocessor operates in accordance with the computer program, the IC card or the module achieves a function thereof. The IC card or the module may have a tamper resistant.

(8) The present invention may be realized by methods described in the above-mentioned embodiment. Also, the present invention may be realized by a computer program executed on a computer for realizing these methods, or by a digital signal representing the computer program.

Also, the present invention may be realized by a computer-readable recording medium on which the computer program or the digital signal is recorded. Examples of the computer-readable recording medium include a flexible disk, a hard disk, a CD-ROM, an MO, a DVD, a DVD-ROM, a DVD-RAM, BD (Blu-ray Disc), and a semiconductor memory. Also, the present invention may be realized by the computer program or the digital signal recorded on such recording media.

Further, the present invention may be realized by the computer program or the digital signal transmitted via an electric communication line, a wired/wireless communication line, a network such as the Internet, or data broadcast. Moreover, the present invention may be realized by a computer system including a microprocessor and a memory. The memory may store the computer program, and the microprocessor may operate in accordance with the computer program.

The computer program or the digital signal may be transferred as being recorded on the recording medium, or via the network or the like, so that the computer program or the digital signal may be executed by another independent computer system.

(9) The above-mentioned embodiment and the modifications can be freely combined within the scope of the appended claims.

**Industrial Applicability**

The present invention can be managerially and repeatedly used for an industry for making and selling MPEG2-TS format contents, an industry for providing a service using these contents via a network, an industry for producing and selling electric apparatuses using these contents, and an industry for using the electric apparatuses.

**Claims**

1. A content output device for transmitting a transmission content in an MPEG2-TS format in response to a request from an external device (200), the content output device comprising:

   an obtaining unit (101-106,116) operable to obtain (a) an original content with one or more discontinuous points at each of which time indicated by time information is discontinuous and (b) discontinuous point information (130) indicating the discontinuous points;
   the content output device **characterized by** further comprising
   an inserting unit (114) operable to insert insertion information in each of the discontinuous points indicated by the discontinuous point information (130) to generate the transmission content, wherein all pieces of insertion information to be inserted at the discontinuous points have the same predetermined data size;
   a calculating unit (110) operable to calculate a file size of the transmission content by (i) obtaining the number of the discontinuous points in the original content from the discontinuous point information (130), (ii) multiplying a data size of insertion information by the obtained number of the discontinuous points to calculate a product thereof, and (iii) adding the data size of the original content to the calculated product;
   a size transmitting unit (11) operable to transmit information indicating the calculated file size to the external device (200); and
   a content transmitting unit (115) operable to transmit the generated transmission content to the external device (200).

2. The content output device of claim 1, wherein
   the insertion information is (130) (i) discontinuity information (DIT) indicating that time assigned to a part of the original content immediately before each discontinuous point and time assigned to a part of the original content immediately after the discontinuous point are discontinuous or (ii) dummy information,
   the discontinuity information (DIT) has been inserted in at least one of the discontinuous points in the original content, and
   the inserting unit includes:

   a judging subunit (113) operable to judge, for each of the discontinuous points, whether or not the discontinuity information has been inserted therein; and
   a selective inserting subunit (114) operable to insert the dummy information in each discontinuous point judged by the judging subunit (113) that the discontinuity information has been inserted therein, and insert the discontinuity information in each discontinuous point judged by the judging subunit (113) that the discontinuity information has not been inserted therein.

3. The content output device of claim 2, wherein
   the original content is composed of a plurality of packets each containing an identifier (PID) that indicates whether or not the packet is the discontinuity information, and
   the judging subunit (113) extracts an identifier contained in each packet located in any of the discontinuous points, and judges that the discontinuity information has been inserted in the discontinuous point when the extracted identifier indicates that the packet is the discontinuity information.

4. The content output device of claim 2 or 3, wherein the selective inserting subunit (113) stores therein the discontinuity information (DIT) and the dummy information in advance.

5. The content output device of any of claims 1 to 4, wherein the size transmitting unit (11) and the content transmitting unit (115) perform the transmission according to a procedure defined in HTTP.

6. The content output device of any of claims 1 to 5, wherein
   the obtaining unit (101-106,116), the calculating unit (110), and the inserting unit (114) are implemented on a single integrated circuit.

7. A content output method used in a content output device for transmitting a transmission content in an MPEG2-TS format in response to a request from an external device (200), the content output method comprising:

   an obtaining step of obtaining (a) an original content with one or more discontinuous points at each of which time indicated by time information is discontinuous and (b) discontinuous point information (130) indicating the discontinuous points;
content output method **characterized by** further comprising:

an inserting step (S123, S124) of inserting the insertion information in each of the discontinuous points indicated by the discontinuous point information (130) to generate the transmission content, wherein all pieces of insertion information to be inserted at the discontinuous points have the same predetermined data size;
a calculating step (S104 - S106) of calculating a file size of the transmission content by (i) obtaining the number of the discontinuous points in the original content from the discontinuous point information, (ii) multiplying a data size of insertion information by the obtained number of the discontinuous points to calculate a product thereof, and (iii) adding the data size of the original content to the calculated product;
a size transmitting step (S107) of transmitting information indicating the calculated file size to the external device (200); and
a content transmitting step (S127) of transmitting the generated transmission content to the external device (200).

8. A content output computer program to be executed on a computer for transmitting a transmission content in an MPEG2-TS format in response to a request from an external device (200), the content output program comprising:

an obtaining step of obtaining (a) an original content with one or more discontinuous points at each of which time indicated by time information is discontinuous and (b) discontinuous point information (130) indicating the discontinuous points;
the content output program **characterized by** further comprising:

an inserting step (S123, S124) of inserting the insertion information in each of the discontinuous points indicated by the discontinuous point information (130) to generate the transmission content, wherein all pieces of insertion information to be inserted at the discontinuous points have the same predetermined data size;
a calculating step (S104 - S106) of calculating a file size of the transmission content by (i) obtaining the number of the discontinuous points in the original content from the discontinuous point information, (ii) multiplying a data size of insertion information by the obtained number of the discontinuous points to calculate a product thereof, and (iii) adding the data size of the original content to the calculated product;
a size transmitting step (107) of transmitting information indicating the calculated file size to the external device (200); and
a content transmitting step (S127) of transmitting the generated transmission content to the external device (200).

9. A computer-readable recording medium having recorded thereon the content output computer program of claim 8.

**Patentansprüche**

1. Inhalt-Ausgabevorrichtung, mit der ein Übertragungs-Inhalt in einem MPEG2-TS-Format in Reaktion auf eine Anforderung von einer externen Vorrichtung (200) übertragen wird, wobei die Inhalt-Ausgabevorrichtung umfasst:

eine Bezugseinheit (101-106, 116), die in Funktion (a) einen Original-Inhalt mit einem oder mehreren Unterbrechungspunkt/en, an dem/denen durch Zeit-Informationen angezeigte Zeit jeweils unterbrochen wird, und (b) Unterbrechungspunkt-Informationen (130) beziehen kann, die die Unterbrechungspunkte anzeigen;
wobei die Inhalt-Ausgabevorrichtung,
**dadurch gekennzeichnet ist, dass** sie des Weiteren umfasst:

eine Einfügeeinheit (114), die in Funktion Einfügungs-Informationen an jedem der durch die Unterbrechungspunkt-Informationen (130) angezeigten Unterbrechungspunkte einfügen kann, um den Übertragungs-Inhalt zu generieren, wobei alle Elemente der an den Unterbrechungspunkten einzufügenden Einfügungs-Informationen die gleiche vorgegebene Datengröße haben;
eine Berechnungseinheit (110), die in Funktion eine Dateigröße des Übertragungs-Inhalts berechnen kann, indem sie a) die Anzahl der Unterbrechungspunkte in dem Original-Inhalt aus den Unterbrechungspunkt-Informationen (130) ermittelt, b) eine Datengröße von Einfügungs-Informationen mit der ermittelten Anzahl der Unterbrechungspunkte multipliziert, um ein Produkt derselben zu berechnen, und c) die Datengröße des Original-Inhalts zu dem berechneten Produkt addiert;

eine Größen-Übertragungseinheit (11), die in Funktion Informationen, die die berechnete Dateigröße anzeigen, zu der externen Vorrichtung (200) übertragen kann; und

eine Inhalt-Übertragungseinheit (115), die in Funktion den erzeugten Übertragungs-Inhalt zu der externen Vorrichtung (200) übertragen kann.

2. Inhalt-Ausgabevorrichtung nach Anspruch 1, wobei
die Einfügungs-Informationen (130) a) Unterbrechungs-Informationen (DIT), die anzeigen, dass Zeit, die einem Teil des Original-Inhalts unmittelbar vor jedem Unterbrechungspunkt zugewiesen ist, und Zeit, die einem Teil des Original-Inhalts unmittelbar nach dem Unterbrechungspunkt zugewiesen ist, unterbrochen sind, oder b) Leer-Informationen sind,
die Unterbrechungs-Informationen (DIT) an wenigstens einem der Unterbrechungspunkte in dem Original-Inhalt eingefügt worden sind, und
die Einfügeeinheit enthält:

eine Feststell-Teileinheit (113), die in Funktion für jeden der Unterbrechungspunkte feststellen kann, ob die Unterbrechungs-Informationen eingefügt worden sind oder nicht; und
eine Teileinheit (114) zum selektiven Einfügen, die in Funktion die Leer-Informationen an jedem Unterbrechungspunkt einfügen kann, für den durch die Feststell-Untereinheit (113) festgestellt wird, dass die Unterbrechungs-Informationen eingefügt worden sind, und die Unterbrechungs-Informationen an jedem Unterbrechungspunkt einfügen kann, für den durch die Feststell-Teileinheit (113) festgestellt wird, dass die Unterbrechungs-Informationen nicht eingefügt worden sind.

3. Inhalt-Ausgabevorrichtung nach Anspruch 2, wobei
der Original-Inhalt aus einer Vielzahl von Paketen zusammengesetzt ist, die jeweils eine Kennung (PID) enthalten, die anzeigt, ob es sich bei dem Paket um die Unterbrechungs-Informationen handelt oder nicht, und
die Feststell-Teileinheit (113) eine Kennung extrahiert, die in jedem Paket enthalten ist, das sich an einem der Unterbrechungs-Punkte befindet, und feststellt, dass die Unterbrechungs-Informationen an dem Unterbrechungs-Punkt eingefügt worden sind, wenn die extrahierte Kennung anzeigt, dass es sich bei dem Paket um die Unterbrechungs-Informationen handelt.

4. Inhalt-Ausgabevorrichtung nach Anspruch 2 oder 3, wobei die Unterbrechungs-Informationen (DIT) und die Leer-Informationen im Voraus in der Teileinheit (113) zum selektiven Einfügen gespeichert werden.

5. Inhalt-Ausgabevorrichtung nach einem der Ansprüche 1 bis 4, wobei die Größen-Übertragungseinheit (11) und die Inhalt-Übertragungseinheit (115) die Übertragung entsprechend einer in HTTP definierten Prozedur durchführen.

6. Inhalt-Ausgabevorrichtung nach einem der Ansprüche 1 bis 5, wobei die Bezugseinheit (101-106, 116), die Berechnungseinheit (110) und die Einfügeeinheit (114) auf einer einzelnen integrierten Schaltung implementiert sind.

7. Inhalt-Ausgabeverfahren, das in einer Inhalt-Ausgabevorrichtung verwendet wird, mit der ein Übertragungs-Inhalt in einem MPEG2-TS-Format in Reaktion auf eine Anforderung von einer externen Vorrichtung (200) übertragen wird, wobei das Inhalt-Ausgabeverfahren umfasst:

einen Bezugsschritt, in dem a) ein Original-Inhalt mit einem oder mehreren Unterbrechungspunkt/en, an dem/denen durch Zeit-Informationen angezeigte Zeit jeweils unterbrochen wird, und b) Unterbrechungspunkt-Informationen (130) bezogen werden, die die Unterbrechungspunkte anzeigen;
wobei das Inhalt-Ausgabeverfahren **dadurch gekennzeichnet ist, dass** es des Weiteren umfasst:

einen Einfügeschritt (S123, S124). in dem die Einfügungs-Informationen an jedem der durch die Unterbrechungspunkt-Informationen (130) angezeigten Unterbrechungspunkte eingefügt werden, um den Übertragungs-Inhalt zu generieren, wobei alle Elemente der an den Unterbrechungspunkten einzufügenden Einfügungs-Informationen die gleiche vorgegebene Datengröße haben;
einen Berechnungsschritt (S104 - S106), in dem eine Dateigröße des Übertragungs-Inhaltes berechnet wird, indem 1) die Anzahl der Unterbrechungspunkte in dem Original-Inhalt aus den Unterbrechungspunkt-Informationen ermittelt wird, 2) eine Datengröße von Einfügungs-Informationen mit der ermittelten Anzahl der Unterbrechungspunkte multipliziert wird, um ein Produkt derselben zu berechnen, und 3) die Datengröße des Original-Inhaltes zu dem berechneten Produkt addiert wird;

einen Größen-Übertragungsschritt (S107), in dem Informationen, die die berechnete Dateigröße anzeigen, zu der externen Vorrichtung (200) übertragen werden; und

ein Inhalt-Übertragungsschritt (S127), in dem der erzeugte Übertragungs-Inhalt zu der externen Vorrichtung (200) übertragen wird.

8. Inhalt-Ausgabe-Computerprogramm, das auf einem Computer ausgeführt wird, um einen Übertragungs-Inhalt in einem MPEG2-TS-Format in Reaktion auf eine Anforderung von einer externen Vorrichtung (200) zu übertragen, wobei das Inhalt-Ausgabeprogramm umfasst:

einen Bezugsschritt, in dem a) ein Original-Inhalt mit einem oder mehreren Unterbrechungs-Punkt/en, an dem/ denen durch Zeit-Informationen angezeigte Zeit jeweils unterbrochen wird, und b) Unterbrechungspunkt-Informationen (130) bezogen werden, die die Unterbrechungspunkte anzeigen;

wobei das Inhalt-Ausgabeprogramm **dadurch gekennzeichnet ist, dass** es des Weiteren umfasst:

einen Einfügeschritt (S123, S124). in dem die Einfügungs-Informationen an jedem der durch die Unterbrechungspunkt-Informationen (130) angezeigten Unterbrechungspunkte eingefügt werden, um den Übertragungs-Inhalt zu generieren, wobei alle Elemente der an den Unterbrechungspunkten einzufügenden Einfügungs-Informationen die gleiche vorgegebene Datengröße haben;

einen Berechnungsschritt (S104 - S106), in dem eine Dateigröße des Übertragungs-Inhaltes berechnet wird, indem 1) die Anzahl der Unterbrechungspunkte in dem Original-Inhalt aus den Unterbrechungspunkt-Informationen ermittelt wird, 2) eine Datengröße von Einfügungs-Informationen mit der ermittelten Anzahl der Unterbrechungspunkte multipliziert wird, um ein Produkt derselben zu berechnen, und 3) die Datengröße des Original-Inhaltes zu dem berechneten Produkt addiert wird;

einen Größen-Übertragungsschritt (S107), in dem Informationen, die die berechnete Dateigröße anzeigen, zu der externen Vorrichtung (200) übertragen werden; und

ein Inhalt-Übertragungsschritt (S127), in dem der erzeugte Übertragungs-Inhalt zu der externen Vorrichtung (200) übertragen wird.

9. Computerlesbares Aufzeichnungsmedium, auf dem das Inhalt-Ausgabe-Computerprogramm nach Anspruch 8 aufgezeichnet ist.

## Revendications

1. Dispositif de sortie de contenu pour transmettre un contenu de transmission dans un format MPEG2-TS en réponse à une demande d'un dispositif externe (200), le dispositif de sortie de contenu comprenant :

une unité d'obtention (101-106, 116) fonctionnelle pour obtenir (a) un contenu original avec un ou plusieurs points discontinus, pour chacun desquels le temps indiqué par de l'information temporelle est discontinu, et (b) de l'information de point discontinu (130) indiquant les points discontinus ;

le dispositif de sortie de contenu étant **caractérisé en ce qu'**il comprend en outre

une unité d'insertion (114) fonctionnelle pour insérer de l'information d'insertion dans chacun des points discontinus indiqués par l'information de point discontinu (130) pour générer le contenu de transmission, dans laquelle tous les éléments d'information d'insertion à insérer aux points discontinus présentent la même taille de données prédéterminée ;

une unité de calcul (110) fonctionnelle pour calculer une taille de fichier du contenu de transmission (i) en obtenant le nombre des points discontinus dans le contenu original à partir de l'information de point discontinu (130), (ii) en multipliant une taille de données d'information d'insertion par le nombre obtenu de points discontinus pour calculer leur produit, et (iii) en ajoutant la taille de données du contenu original au produit calculé ;

une unité de transmission de taille (11) fonctionnelle pour transmettre de l'information indiquant la taille de fichier calculée au dispositif externe (200) ; et

une unité de transmission de contenu (115) fonctionnelle pour transmettre le contenu de transmission généré au dispositif externe (200).

2. Dispositif de sortie de contenu selon la revendication 1, dans lequel

l'information d'insertion est (130) (i) de l'information de discontinuité (DIT) indiquant que le temps assigné à une partie du contenu original immédiatement avant chaque point discontinu et le temps assigné à une partie du contenu original immédiatement après chaque point discontinu est discontinu, ou (ii) de l'information factice, l'information de discontinuité (DIT) a été insérée dans au moins un des points discontinus dans le contenu original, et l'unité d'insertion comprend :

une sous-unité de détermination (113) fonctionnelle pour déterminer, pour chacun des points discontinus, si l'information de discontinuité y a été insérée ou non ; et
une sous-unité d'insertion sélective (114) fonctionnelle pour insérer l'information factice dans chaque point discontinu déterminer par la sous-unité d'évaluation (113) comme comportant l'information de discontinuité insérée, et pour insérer l'information de discontinuité dans chaque point discontinu déterminé par la sous-unité d'évaluation (113) comme ne comportant pas l'information de discontinuité insérée.

3.  Dispositif de sortie de contenu selon la revendication 2, dans lequel
    le contenu original est composé d'une pluralité de paquets contenant chacun un identifiant (PID) qui indique si le paquet est ou non le paquet d'information de discontinuité, et
    la sous-unité d'évaluation (113) extrait un identifiant contenu dans chaque paquet se trouvant à l'un quelconque des points discontinus, et juge que l'information de discontinuité a été insérée dans le point discontinu lorsque l'identifiant extrait indique qu'il s'agit du paquet d'information de discontinuité.

4.  Dispositif de sortie de contenu selon la revendication 2 ou 3, dans lequel l'information de discontinuité (DIT) et l'information factice sont stockées à l'avance dans la sous-unité d'insertion sélective (113).

5.  Dispositif de sortie de contenu selon l'une quelconque des revendications 1 à 4, dans lequel l'unité de transmission de taille (11) et l'unité de transmission de contenu (115) mettent en oeuvre la transmission selon une procédure définie en HTTP.

6.  Dispositif de sortie de contenu selon l'une quelconque des revendications 1 à 5, dans lequel
    l'unité d'obtention (101-106, 116), l'unité de calcul (110) et l'unité d'insertion (114) sont mises en oeuvre dans un circuit intégré unique.

7.  Procédé de sortie de contenu utilisé dans un dispositif de sortie de contenu pour transmettre un contenu de transmission dans un format MPEG2-TS en réponse à une demande d'un dispositif externe (200), le procédé de sortie de contenu comprenant :

une étape d'obtention consistant à obtenir (a) un contenu original avec un ou plusieurs points discontinus, pour chacun desquels le temps indiqué par de l'information temporelle est discontinu, et (b) de l'information de point discontinu (130) indiquant les points discontinus ;
le procédé de sortie de contenu étant **caractérisé en ce qu'**il comprend en outre :

une étape d'insertion (S123, S124) consistant à insérer de l'information d'insertion dans chacun des points discontinus indiqués par l'information de point discontinu (130) pour générer le contenu de transmission, dans laquelle tous les éléments d'information d'insertion à insérer aux points discontinus présentent la même taille de données prédéterminée ;
une étape de calcul (S104 - S106) consistant à calculer une taille de fichier du contenu de transmission (i) en obtenant le nombre des points discontinus dans le contenu original à partir de l'information de point discontinu, (ii) en multipliant une taille de données d'information d'insertion par le nombre obtenu de points discontinus pour calculer leur produit, et (iii) en ajoutant la taille de données du contenu original au produit calculé ;
une étape de transmission de taille (S107) consistant à transmettre de l'information indiquant la taille de fichier calculée au dispositif externe (200) ; et
une étape de transmission de contenu (S127) consistant à transmettre le contenu de transmission généré au dispositif externe (200).

8.  Logiciel de sortie de contenu à exécuter sur un ordinateur pour transmettre un contenu de transmission dans un format MPEG2-TS en réponse à une demande d'un dispositif externe (200), le logiciel de sortie de contenu comprenant :

une étape d'obtention consistant à obtenir (a) un contenu original avec un ou plusieurs points discontinus, pour chacun desquels le temps indiqué par de l'information temporelle est discontinu, et (b) de l'information de point discontinu (130) indiquant les points discontinus ;

le logiciel de sortie de contenu étant **caractérisé en ce qu'**il comprend en outre :

une étape d'insertion (S123, S124) consistant à insérer de l'information d'insertion dans chacun des points discontinus indiqués par l'information de point discontinu (130) pour générer le contenu de transmission, dans laquelle tous les éléments d'information d'insertion à insérer aux points discontinus présentent la même taille de données prédéterminée ;

une étape de calcul (S104 - S106) consistant à calculer une taille de fichier du contenu de transmission (i) en obtenant le nombre des points discontinus dans le contenu original à partir de l'information de point discontinu, (ii) en multipliant une taille de données d'information d'insertion par le nombre obtenu de points discontinus pour calculer leur produit, et (iii) en ajoutant la taille de données du contenu original au produit calculé ;

une étape de transmission de taille (107) consistant à transmettre de l'information indiquant la taille de fichier calculée au dispositif externe (200) ; et

une étape de transmission de contenu (S127) consistant à transmettre le contenu de transmission généré au dispositif externe (200).

9. Support d'enregistrement lisible par un ordinateur sur lequel est enregistré le logiciel de sortie de contenu selon la revendication 8.

**FIG. 1**

RECEIVING DEVICE — 300

— 800

— 100

CONTENT RECORDING DEVICE

**EXTRACTION WRITING UNIT** — 101

**INFORMATION STORING UNIT** — 102

103
104
105

**OPERATION INPUTTING UNIT** — 116

**EDITING UNIT** — 106

**CONTROL INFORMATION READING UNIT** — 117

**READING CONTROL UNIT** — 108

**DB READING UNIT** — 109

**SIZE CALCULATING UNIT** — 110

**CONTENT READING UNIT** — 112

**DIT JUDGING UNIT** — 113

**SELECTIVE INSERTING UNIT** — 114

**CONTROL INFORMATION TRANSMITTING UNIT** — 118

**REQUEST RECEIVING UNIT** — 107

**SIZE TRANSMITTING UNIT** — 111

**CONTENT TRANSMITTING UNIT** — 115

— 1000

— 15

— 200

CONTENT REPRODUCING DEVICE

**REQUEST TRANSMITTING UNIT** — 202

**INPUTTING UNIT** — 201

**SIZE RECEIVING UNIT** — 203

**CONTENT RECEIVING UNIT** — 204

**REPRODUCING UNIT** — 205

**OUTPUTTING UNIT** — 206

## FIG. 2

INFORMATION STORING UNIT — 102

CONTROL INFORMATION STORAGE AREA — 103

URI TABLE — 121

⋮

DB INFORMATION STORAGE AREA — 104

DISCONTINUOUS POINT TABLE — 130

PACKET COUNT TABLE — 140

GENERAL AREA — 105

CONTENT : A — 161

CONTENT : B — 162

CONTENT : C — 163

⋮

⋮

## FIG. 3A

_130

DISCONTINUOUS POINT TABLE

| DISCONTINUOUS POINT INFORMATION | | | | | | |
|---|---|---|---|---|---|---|
| CONTENT NAME | CONTINUOUS STARTING POINT | | | | | |
| A | 0 | 400 | 1000 | 3000 | – | 131 |
| B | 0 | 150 | 320 | 622 | 1160 | 132 |
| C | 0 | 100 | 450 | – | – | 133 |
| ⋮ | ⋮ | ⋮ | ⋮ | ⋮ | ⋮ | |

## FIG. 3B

_140

PACKET COUNT TABLE

| PACKET COUNT INFORMATION | | |
|---|---|---|
| CONTENT NAME | PACKET COUNT | |
| A | 5000 | 141 |
| B | 2000 | 142 |
| C | 500 | 143 |
| ⋮ | ⋮ | |

FIG. 4

SELECTIVE INSERTING UNIT
114

113
DIT
JUDGING UNIT

501
INFORMATION
INSERTING
UNIT

115
CONTENT
TRANSMITTING
UNIT

504

502
DIT
STORING UNIT

503
DUMMY
STORING UNIT

EP 1 962 506 B1

FIG. 5A

161 CONTENT:A

| 0 | 1 | ···· | 399 | 400 | 401 | ···· | 999 | 1000 | 1001 | ···· | 2999 | 3000 | ···· | 4999 |

|←——— a ———→|←——— b ———→|←——— c ———→|←——— d ———→|

FIG. 5B

171

| 0 | 1 | ···· | 399 |  DUMMY  | 400 | 401 | ···· | 999 |  DIT  | 1000 | ···· | 2999 |  DUMMY  | 3000 | ···· | 4999 |

|←——— a ———→| |←——— b ———→| |←——— c ———→| |←——— d ———→|

▨ DIT PACKET

▧ DUMMY PACKET

FIG. 6

START REPRODUCTION OF CONTENT

CONTENT RECORDING DEVICE     CONTENT REPRODUCING DEVICE

S101
TRANSMIT
REPRODUCTION REQUEST

REPRODUCTION
REQUEST         S102

S103
READ DISCONTINUOUS POINT INFORMATION
(INCLUDING CONTINUOUS STARTING POINTS
"S0", "S1", "S2"..."Sn")
AND PACKET COUNT INFORMATION
(INCLUDING PACKET COUNT "P1")
CORRESPONDING TO SPECIFIED CONTENT
BASED ON URI INCLUDED IN
REPRODUCTION REQUEST

S104
COUNT THE NUMBER OF
CONTINUOUS STARTING POINTS "n"
OTHER THAN "S0" INCLUDED IN
DISCONTINUOUS POINT INFORMATION

S105
$TP = P1 + Dp \times n$
$(Dp = 2)$

S106
FILE SIZE = 192 BYTES × TP

S107
TRANSMIT FILE SIZE

FILE SIZE
S109

S111
TRANSMIT CONTENT
TRANSMISSION REQUEST

CONTENT
TRANSMISSION REQUEST
S113

S114
READ CORRESPONDING CONTENT

A01                                 B01

## FIG. 7

(A01)

S116
REPEAT PERFORMING PROCESSING ON
CONTINUOUS STARTING POINT "Si"
i = 1 ~ n

S118
SPECIFY PACKET WHOSE PACKET NUMBER
IS "Si - 1" BASED ON
CONTINUOUS STARTING POINT "Si"

S119
EXTRACT PID FROM SPECIFIED PACKET
AND COMPARE EXTRACTED PID WITH
PID SPECIFIC TO DIT PACKET

S121
DIT PACKET ? — NO

YES

S123
INSERT DUMMY PACKET IMMEDIATELY
AFTER SPECIFIED PACKET

S124
INSERT DIT PACKET IMMEDIATELY
AFTER SPECIFIED PACKET

S126
REPETITION END

S127
TRANSMIT
TRANSMISSION CONTENT

END

TRANSMISSION
CONTENT
S129

(B01)

S131
DECODE AND REPRODUCE
TRANSMISSION CONTENT

END

**EP 1 962 506 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002016880 A
- JP 2002368767 A
- US 6771881 B
- WO 2005006745 A
- US 20040264566 A

### Non-patent literature cited in the description

- *ARIB, a terrestrial digital television broadcast operation regulation, technical data,* vol. 2